# FASCICULE DE BREVET EUROPEEN

(11) **EP 1 658 422 B1**
(45) Date de publication et mention de la délivrance du brevet: **30.05.2007**
(21) Numéro de dépôt: 05775414.5
(22) Date de dépôt: 11.05.2005
(51) Int. Cl.: F01P 5/00, F02C 5/02

(54) **MOTEUR TORIQUE DE REVOLUTION**
DREHRINGMOTOR
REVOLVING TOROIDAL MOTOR

(30) Priorité: 18.06.2004 FR 0406741
(43) Date de publication de la demande: 24.05.2006
(73) Titulaire: Adam, Claude-Louis, 86000 Poitiers (FR)
(72) Inventeur: Adam, Claude-Louis, 86000 Poitiers (FR)
(86) Numéro de dépôt international: PCT/FR2005/001184
(87) Numéro de publication internationale: WO 2006/008353

(56) Documents cités:
- EP-A- 0 416 977
- DE-A1- 1 601 582
- DE-A1- 3 600 279
- DE-A1- 10 229 176
- FR-A- 2 284 761
- FR-A- 2 662 209
- GB-A- 290 014

## Description

a) secteur de la technique sur lequel porte l'invention

La présente invention concerne les moteurs à explosion par jet discontinus ou continus. L'axe de révolution est aussi axe du moteur ,l'invention est dans le fait que les segments libres cassent à grandes et moyennes vitesses de rotation. C'est pourquoi ils sont soudés, au tore plein découpé au niveau de la jointure du tore et du plateau - moyeu. D'autre part avec un seul canon le moteur torique a un point très chaud et un point froid relativement, ce qui provoque des frottements .Symétriquement placés, ces canons répartissent la température, donc les différences de dilatation .Je garderais le schémas avec un canon mais je parlerais des canons (2) . Enfin comme idée inventive d'un moteur rotatif est d'abord de pouvoir les coupler à notre guise sur l'axe moteur MAIS aussi d'en inverser un ou deux, qui ,en relâchant la pédale d'accélération mettent ces deux éléments en jeu , avec la précaution pour qu'il n'y ait pas de choc dans la mise en fonctionnement de ces tores freins moteur de leurs retirer les segments d'étanchéité. Chaque demi tore creux portant, sertis, les roulements dans lesquels l'arbre est claveté au plateau moyeu du tore plein, plateau possédant des encoches, l'arbre est évidé , permettant de rendre solidaire :tore découpé et arbre moteur. La clavette étant au montage des demi tores creux calée par le roulements sans frottement .Les couronnes extérieures des roulements étant solidaires du tore creux après montage. Il y a deux roulements **;Je maintien la calotte sphérique des canons où les bougies au foyer provoquent des explosions à jets parallèles.**

b) l'état de la technique dans le secteur considéré : dans les dispositifs coaxiaux des tores. Un moteur torique selon l'art antérieur est connu par le document FR- A-2284761. d) Le procédé présenté permet une rupture électrique instantanée par rupture photoélectrique suivie d'interrupteurs électroniques alimentant d'une part la bobine de haute tension, donc les bougies , d'autre part l'ouverture de vannes de commandes électromagnétiques d'alimentation. Il n'y a pas de pistons en mouvements rectilignes mais des disques toriques en mouvement continu de révolution. L'étanchéité est obtenue par des segments soudés sur le tore découpé à l'endroit de la jonction avec le plateau-moyeu du tore découpé moteur, et usinés de près par rapport au tore creux, relié au roulement à galets ou à bille. Le joint gazeux entre les segments et le tore creux ajoute à l'étanchéité. La revendication 1 décrit le dispositif selon l'invention. Cette mesure est inventive par le fait que la dilatation par inertie de masse ne jouent pas sur ces segments travaillés de près mais n'étant pas massiques, ni lorsqu'ils sont libres cassent par force centrifuge sur les parois à cheminées du tore creux .

Les forces de mouvement sont transmises par rotation du tore découpé en disques solidaires entre eux par une portion commune de ce tore. Ce tore est propulsé par explosion de combustion de gaz, carburant et comburant injectés. La rotation se fait dans un tore creux de diamètre faiblement supérieur à celui du tore découpé pour ce qui est des disques 8) et 9),(sans être travaillé de près). C'est un moteur torique dont le corps du tore plein peut être de diamètre faible et indifférent mais en tenant compte de la résistance des matériaux.

Le mélange gazeux est réglable pendant le fonctionnement.

c) Les moyens mis en oeuvre pour obtenir ce résultat sont:

UN tore creux (1) faisant corps avec les canons (2) en forme de tuyère ; le tore plein découpé circule par mouvement de rotation du tore découpé (3), autour d'un moyeux (4) commun avec le tore creux .Ce moteur (5) a comme pièces mobiles.: le tore découpé(3) en disques d'explosion (6) et d'admission (7) munis de segments soudés (8) pour les disques d'explosion, (9) pour les disques d'admission. Les segments 8 et 9 sont soudés au tore découpé au niveau du plateau - moyeu du tore découpé ,usinés de près par rapport au tore creux.. La combustion des gaz est obtenue par l'allumage au moyen d'une bougie (18) commandée par une la haute tension d'une bobine (19) .La rupture du courant est obtenue par l'action d'une cellule photoélectrique (20) qui reçoit un rayon lumineux (21) et coupé par le noir du tambour (23) , rayon lumineux par la lampe (24) .La forme du miroir est l'intersection d'un cylindre identique au tambour par deux plans parallèles .Entre la cellule photoélectrique (20) et la bobine (19) un interrupteur électronique (25) alimente le primaire de la bobine d'allumage.

L'admission se fait par l'ouverture des vannes électroaimants (26) et (27) en série avec la masse et un interrupteur électronique (28) commandé par la cellule photoélectrique (29) soumise à la lumière interrompue d'un rayon émis par la lampe (30), et réfléchie par le miroir (31) fixé au tambour (23) ou absorbé par le noir du tambour (23).Les miroirs (31) ont une projection plane triangulaire rectangle dont un côté de l'angle droit est une génératrice (32) du cylindre (23). Les conduites (33) et (34) amènent le carburant (35) et le comburant (36) dans les canons (2) .Le jet (37) obtenu frappe le disque de combustion alors que les courants morts (38) affectent peu le recto (39) du disque d'alimentation (7).. Une parois (40) épousant la forme des canons et d'une partie du tore creux , et permet la circulation du réfrigérant (41) .Les vapeurs (42) de combustion l'échappent par les orifices (43)

L'étanchéité, est donc faite par les segments soudés et les joints Spi au niveau des roulements centraux, et l'axe du moteur. Les joints Spi ne sont pas indispensables compte tenu de la notion de roulement de roue des voitures.

Pour la facilité de la fabrication , du moulage du tore découpé et du tore creux par moitiés '52 et 53 ;ces moitiés sont assemblées par joint 54 et serrage par goujons ou boulons et écrous 55 Les conduites des carburants dans les canons par les buses 56 et 57 ! Les conduites des carburants 35 sont poussés dans les canons par les buses 56 et 57 ! par les pompes 58 59 en passant par les vannes 60 et 61 mues par les électroaimants 26 et 27 soit directement après les réservoirs , soit après réchauffement du carburant et du comburant dans les deux circuits différents du moteur ; le réfrigérant peut être l'eau ou l'air..

L'admission se fait entre le verso 62 du disque d'admission et le recto 63 du disque d'explosion 6. la combustion se fait entre le verso 64 du disque d'explosion 6 et le recto 39 du disque d'admission 7. Ces positions des disques étant définies par rapport à l'arbre 65 du moteur couplé à l'arbre 66 de la machine utilisatrice. Un repère 67 peut être fixé au tore sur le rayon vecteur du tore perpendiculaire à l'axe des canons. Un repère 68 est fixé sur l'arbre du moteur, axe du tore. Le repère 68 est génératrice d'un plan d'un disque d'explosion et situé du même côté par rapport à l'axe.

Un traîneau 69 porte le système électrophotonique d'allumage qui peut déplacer le point d'incidence du rayon lumineux parallèlement à l'axe du tambour 23 à miroirs cylindriques à bords parallèles. L'instant d'explosion est plus ou moins retardé par rapport au passage du disque d'explosion 6 au niveau du repère 67.

Un traîneau 70 permet au système photoélectrique et électronique d'alimentation de déplacer le point d'incidence du rayon lumineux parallèlement à l'axe du tambour 23 de telle manière qu'il balaie une section du miroir cylindrique triangulaire, plus ou moins grande qui règle une admission plus ou moins longue de gaz de combustion ; donc qui produit une force plus ou moins grande sur le tore découpé. Ce principe est applicable dans les moteurs ordinaires.

Les canons et le tore creux sont moulés ensembles par moitié 52 et 53 selon un plan perpendiculaire à l'axe du tore et médian des canons. Les parties 52 et 53 sont fixés par les boulons ou goujons et écrous 55 après avoir bloqué les clavettes de l'arbre moteur et le plateau du tore découpé.

Les parois du système réfrigérant à cavités 71 par les boulons ou goujons et écrous 72. Les parois 73 des cavités 71 s'appuient sur l'extérieur des parois des canons et du tore creux.

Fonctionnement : Le rayon lumineux de la lampe 30 est réfléchi par le miroir 31; la cellule photoélectrique fourni du courant à l'interrupteur électronique 28 qui ferme le circuit des électroaimants !Les vannes s'ouvrent par action des électroaimants qui luttent contre le ressort de rappel.

Les gaz remplissent les canons 2. Pendant ce temps le disque 6 remplace le disque 7 à la position du repère 67 .Le rayon de la lampe 30 est alors éteint à la réflexion par le passage du point d'incidence dans la partie noire du tambour 23 Le rayon lumineux de la lampe 24 est réfléchi sur la cellule photoélectrique 20 par le miroir 22. Le rayon réfléchi s'éteint brutalement ; l'interrupteur électronique 28 ouvre le circuit instantanément. L'induction dans la bobine 19 est optimale, l'arc se forme instantanément sur les bougies.

Le réglage est prévu pour le voisinage du passage du disque 6 devant le repère 67. L'explosion se produit ainsi que la détente des gaz pendant que le disque 7 prend la place du disque 6 devant le repère 67. L'explosion forme un jet qui frappe 64. A ce moment là la lampe 30 a un rayon réfléchi sur la cellule photoélectrique 29 et ainsi de suite.

Les pompes 58 et 59 produisent une pression constante. Le calibre des buses 46 et 47 ont des diamètres d'ouverture proportionnellement au volume partiel du gaz pour le mélange de combustion totale. D'autre part le réglage des pressions sur les pompes 58 et 59 affine le réglage du mélange gazeux. Plus la pression est grande plus de fluide peut s'écouler dans un temps donné par un orifice donné. En jouant sur les pressions, l'arrivée du carburant peut être forcée par rapport au comburant et vis et versa. Par contre le traîneau 70 agit identiquement sur les deux fluides L'usage de ces moteurs couplés sur un même axe que l'axe de générateurs électriques peuvent fournir de l'énergie électrique à partir de l'hydrogène et l'oxygène à volonté.

Le moteur torique peut utiliser, en simplifiant, le jet hydraulique provoqué par une pompe ou une colonne forcée. Je rappelles les idées inventives de ce dépôt : Les segments d'étanchéité 8 et 9 sont soudés au tore découpé au niveau de son plateau - moyeu et usinés de près par rapport au tore creux (10 microns de diamètre de différence entre les 8 et 9 et le 1. Les joints Spi aux roulements du moteur suffisent à l'étanchéité au moment des explosions, par le peu de gaz pouvant fuir entre le plateau du tore découpé et les deux plateaux du tore creux. Les canons sont multiples ,au moins deux pour équilibrer la température des tores. Le joint gazeux ajoute à l'étanchéité.

Le couplage avec des moteurs d'action, avec des moteurs de réaction c'est à dire de force de rotation inversée pour faire frein moteur. Ces derniers n'ayant pas d'étanchéité de pression pour éviter le choc du frein moteur.

Suppression des éléments :11 ; 12 ; 16 ; 15 ; 50 ; 48 ; 13 ; 16 ; 14 ; 10. Il persiste les gorges des segments 8 et 9 ,permettant la dilatation cinétique du tore plein et un jeu des segments étanches dans leurs gorges suffisamment profondes et étroites. Le refroidissement se fait par injection d'air froid dans chaque tore creux ce qui sera exposé dans ce dépôt plus précisément.

Tous moteurs de véhicules, air, mer, terre ; centrales électriques utilisant l'hydrogène comme carburant formé par l'hydraulique des barrages différentiels en série ; en couplant des moteurs toriques de diamètres suffisants et couplés sur l'axe des alternateurs conformes à la demande.

Le refroidissement du moteur torique de révolution se fait comme suit, ce dernier ayant alors possibilité de fonctionnement à toutes températures

Le tore creux, réunissant deux demi tores creux a des évidements ou découpes (80), symétriques par rapport à l'assemblage des deux demi tores creux et symétriques par rapport au moyeu. Ces ouvertures peuvent aller de l'échappement (43) au canons(2) Le mouvement du tore plein découpé avec ses segments libres, mais soudés au plateau ;aspire l'air à l'intérieur, ce qui serait suffisant pour un fonctionnement à une température aléatoire mais convenable. Entre (43) et (2) il n'y a aucune fonction moteur , voire d'échappement.

Les tores sur l'axe moteur ayant la propriété de l'alignement des échappement(43) et de canons (2) l'hélice (81) solidaire de l'axe général, produit un courant de fluide d'air ,entrant dans l'ouverture (89), et soufflant dans les conduites (82) symétriques par rapport à l'axe , et sont munies d'ouvertures (88) placées sur les ouvertures (80) des tores (1)

Les conduites (82) peuvent être semi obturée en bout de la série des tores par la plaque perforée (90) pour créer aux orifices (88) une pression légère augmentant l'aspiration de l'air des conduites (82) par les tores en mouvement circulaire, air propulsée par l'hélice (81), créant une pression..

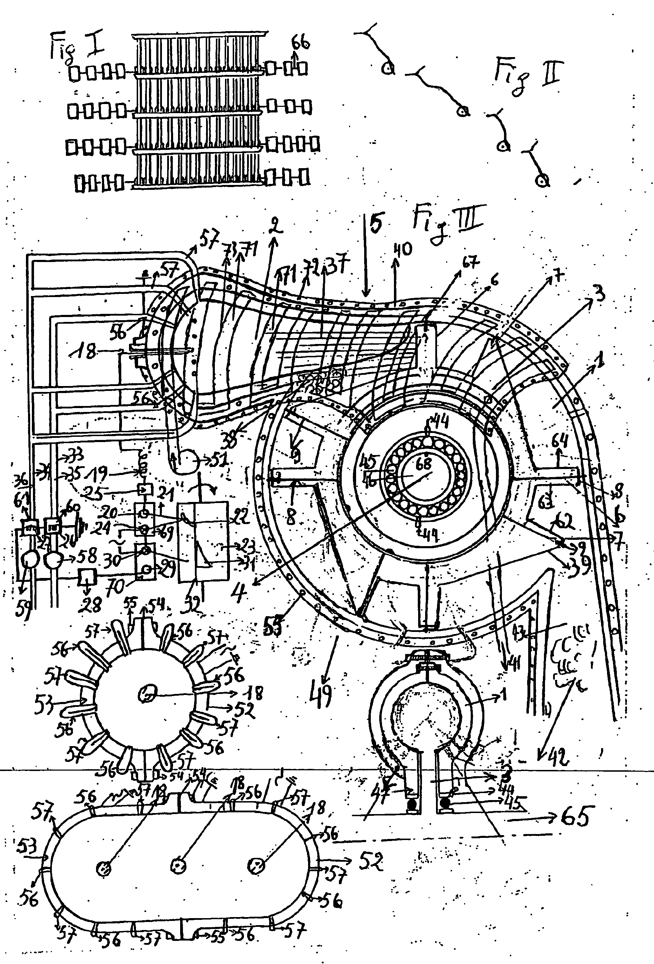

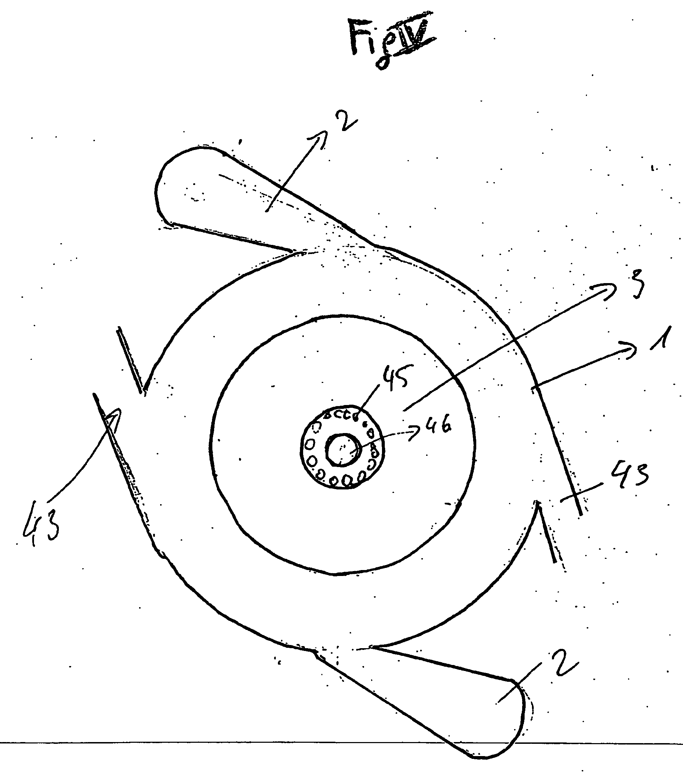

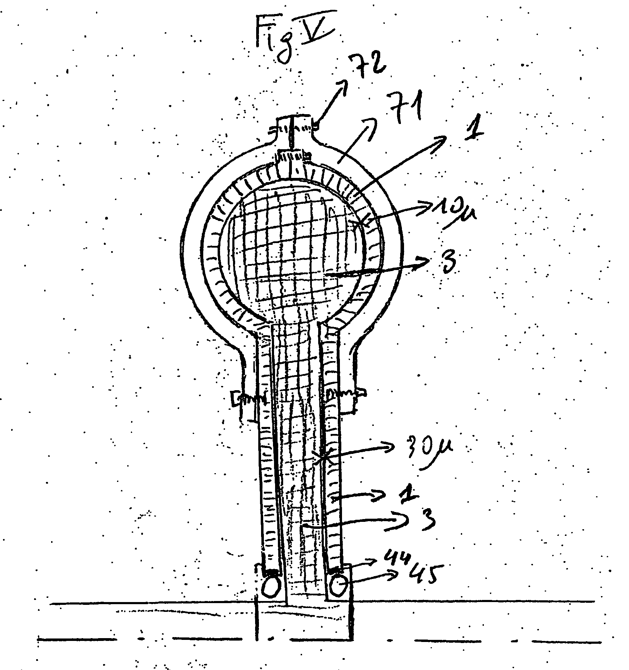

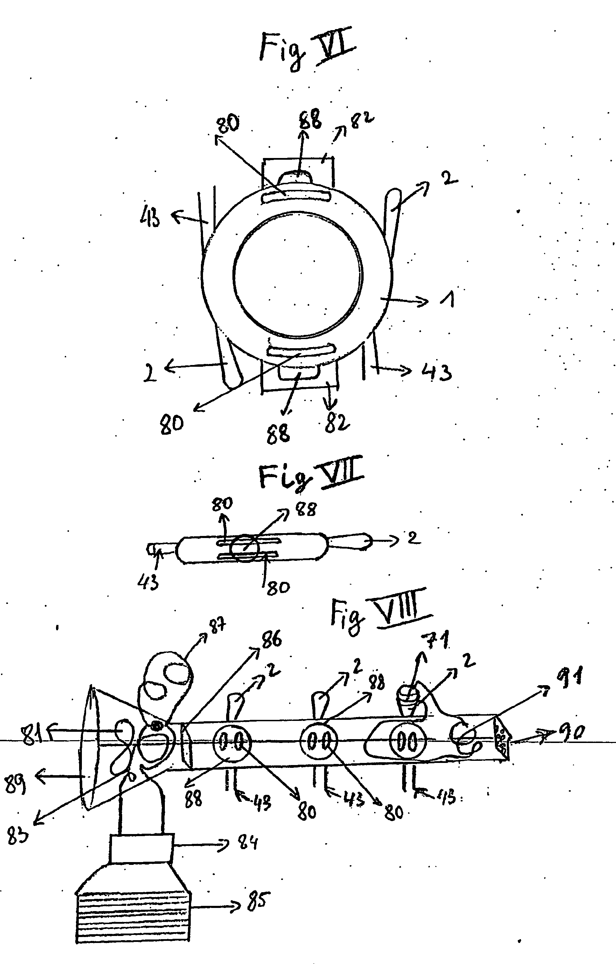

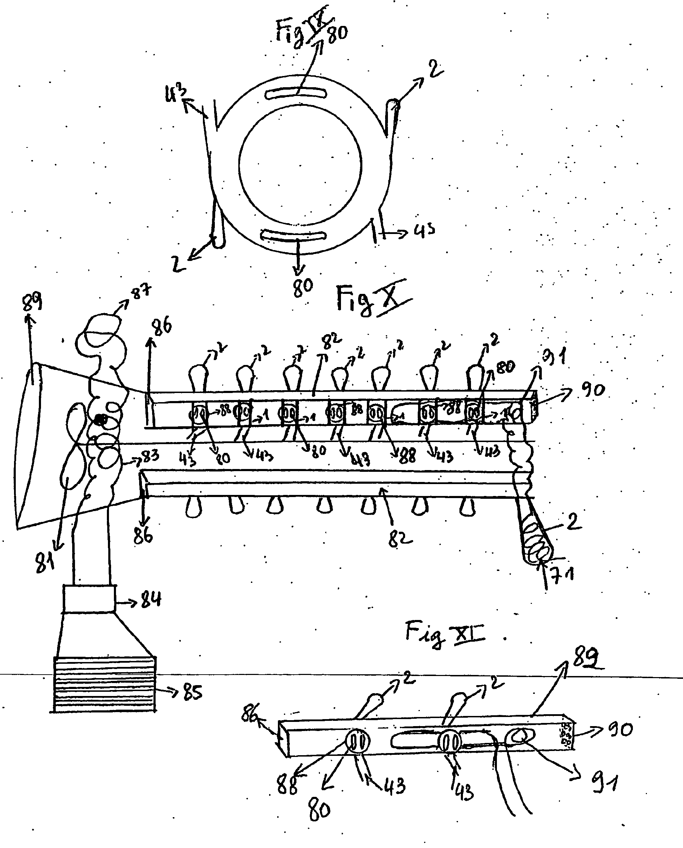

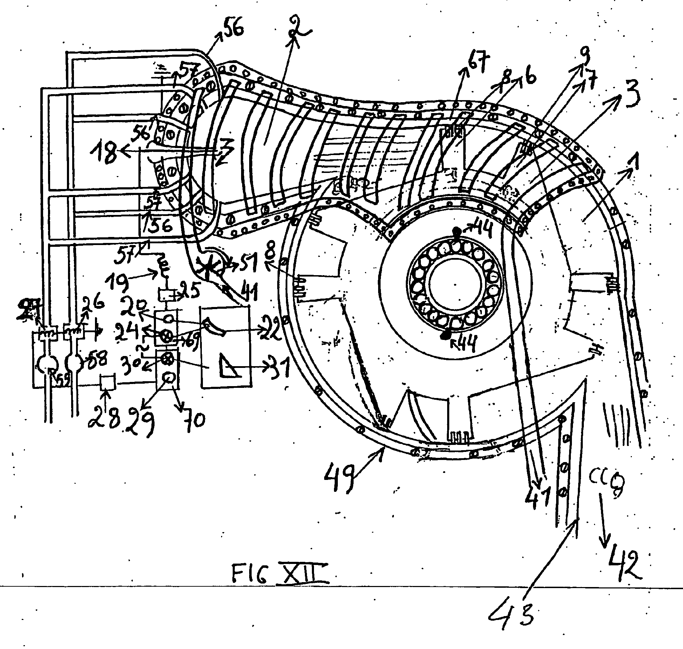

L'adjonction d'un système courant de refroidissement genre réfrigérateur ,muni d'un compresseur (84) et d'un absorbeur de chaleur (85), produit sur le serpentin (83) (Fig 6) un froid accentué sur le courant de fluide provoqué par l'hélice (81). Ce refroidissement par le compresseur (84), peut être constant électriquement, ou variable mécaniquement en le couplant à l'axe général du moteur.

Le réglage du froid , si nécessaire , peut être fait par le Le réglage du froid , si nécessaire , peut être fait par le serpentin (87) à l'air libre, par dérivation d'une partie du fluide réfrigérant, par commande électrique gérée par un thermostat d'une façon classique

D'autre part le serpentin issu du refroidissement des canons (71), à l'intérieure conduites(82), dans la semi compression par le orifices de (90) des conduites (82) permet au système de refroidissement (71), d'avoir l'efficacité voulue par le nombre de spirales (91),dans les conduites (82) .Cette spirales (91) pouvant tapisser une longueur adéquate des conduites (82)

L'air froid conditionné des conduites (82), par les orifices (88) aspirée par le mouvement des tores pleins découpés, refroidit les tores pleins et les tore creux, dans une notion adéquate d'équilibre approximatif entre les dilatations thermiques des segments et des tores creux travaillés de près.

Il n'y a donc pas de frottement du moteur, l'espace en microns ,entre segments et tores creux, permet le joint gazeux à l'explosion en jet parallèle.

Ainsi le moteur peut fonctionner dans une fourchette de moteur à quatre temps pour un volume de refroidissement faible, le système de refroidissement du liquide réfrigérant pouvant être du au compresseur (84) électrique, donc indépendant du régime du moteur travaillant sans frottement. L'air froid aspiré , déjà sous faible pression dans la conduite (82), se mélange aux gaz chauds de combustion résiduels, après le passage dans l'échappement (43) refroidit ces gaz, en les condensant, et le tore plein découpé en rotation.

La possibilité de réunir les corps (43) peut s'accompagné par une dépression à l'échappement général ,produite par une pompe d'aspiration mécaniquement entraînée par l'axe du moteur. Cette pompe n'a pas besoin d'être puissante donc n'absorbe pas beaucoup d'énergie ;

Le refroidissement étant indépendant du remplissage des canons, et de l'explosion des gaz, n'intervient pas dans l'action moteur.

Les parties chaudes entre canons et échappement sont symétriques ; par conséquent le refroidissement symétrique permet un équilibre de chaleur par conséquent une température générale convenable, voire faible. La compression légère due à l'hélice dans son carénage et les conduites (82) produit une pression sur les orifices (88), qui facilite l'entrée de l'air froid dans les ouverture (80), tout en enveloppant d'air froid les tores creux.

Une façon simple d'effacer le bruit de l'échappement général est de réunir les échappements dans une enceinte remplie , sans tassement de paille métallique inerte chimiquement aux gaz ;cette enceinte appelée pot d'échappement a son orifice à l'air libre sous aspiration d'une pompe provoquant une dépression dans le pot jusqu'au moteur. La paille métallique formée de fibre fine appelée communément mousse métallique peut tout simplement être placée sans tassement à la sortie (43) des tores à la jonction légèrement étranglée des tubes canalisant les gaz vers le pot. Selon l'encombrement, étant donné l'existence de deux alignements (43) il peut techniquement y avoir deux pots aspirants ; les conduites vers les pots ou le pot peuvent être flexibles .Cette chaleur ,selon l'utilisation peut être dépensée à l'air libre , voir dans certain cas , profiter d'un conditionnement cryométrique par ventilation froide sur l'ensemble du moteur.

L'encombrement de l'échappement est plus important que l'encombrement du système de refroidissement du moteur à moins d'admettre deux conduites (82') sur les orifices (43) alignés , les gaz refroidis avant d'entrer dans le pot d'échappement général ,

## Revendications

1. Un dispositif permettant d'utiliser l'explosion de gaz carburant, surtout l'hydrogène, avec un comburant qui peut être l'air, dans un mouvement rotatif entre un tore découpé en rotation dans un tore creux, comprenant :
Plusieurs moteurs avec un même axe du moteur, un tore creux, un tore découpé ayant un plateau-moyeu, des canons (2), pour chacun d'eux, un système d'alimentation des moteurs comprenant des ampoules fixées sur un chariot, des miroirs sur un cylindre noir qui peuvent tourner à la vitesse de rotation du dispositif moteur, cylindre qui en dehors des miroirs triangulaires ou à bords parallèles, empêche la réflexion des rayons lumineux fins et parallèles issus d'ampoules fixées sur le chariot vers des cellules photo électriques commandant des interrupteurs électromagnétiques ou des bobines d'induction ; le dispositif est formé de plusieurs moteurs en série qui sont synchrones sur l'axe des moteurs, le dispositif ayant en outre des segments (8) et (9) d'admission et d'explosion ; les segments d'admission et d'explosion sont travaillés de très près par rapport aux tores creux où circulent les tores découpés quelconques selon la résistance des matériaux ; des disques (6) et (7) portent les segments qui sont libres dans les gorges des disques cités ; le dispositif où la faculté de coupler les moteurs sur un même axe, permet la puissance souhaitée, le frein moteur en inversant la rotation de quelques tores, et l'équilibre thermique de ces éléments est assuré par pluralité des canons ; le dispositif en outre comprenant un système de refroidissement des moteurs rotatifs, le dispositif est **caractérisé en ce que** les segments (8) et (9) d'admission et d'explosion sont SOUDES au tore découpé au niveau de son plateau- moyeu et permettent le non frottement des tores découpés avec les tores creux.

2. Dispositif selon la revendication 1) **caractérisé en ce que** la Dimension des tores est quelconque mais permettent l'existence des segments travaillés de très près par rapport aux tores creux travaillés de près ; les segments sont en outre soudés sur les plateau-moyeux des tores découpés par leurs extrémités, au micron près, et libres dans les gorges des disques, ces derniers peuvent admettre une variance de diamètre avec le diamètre des tores creux ; seuls les segments permettent l'étanchéité après choc gazeux sur les disques d'explosion avec joints gazeux.

3. Dispositif selon la revendication 1) **caractérisé en ce que** les Canons d'un même moteur de la série sont au moins au nombre de deux pour l'équilibre thermique.

4. Dispositif selon la revendication 1) **caractérisé en ce que**, quelques tores sont inversés et dépourvus de segments d'étanchéité pour opposer un frein moteur aux moteurs de propulsion qui sont alors sans combustion, et ce, sans choc par le fait que les disques ont une variance de diamètre avec les tores creux.

5. Dispositif selon les revendications 1) et 4) où le dispositif Comprend une pédale d'accélération, **caractérisé en ce que** la pédale d'accélération opère le changement des admissions des carburants entre les tores de propulsion et les tores freins.

6. Dispositif selon la revendication 1) **caractérisé en ce que** le refroidissement des moteurs toriques de révolution comporte une hélice(81) dans son carénage (89) provoquant un courant d'air assez compressé et refroidi par le réfrigérant (84) dans des conduites (82) symétriques par rapport à l'axe général du moteur ; les conduites sont munies d'orifices (88) permettant l'injection d'air froid dans les tores creux par les ouvertures (80), par pression, et par aspiration due au mouvement des tores découpés.

## Claims

1. With device Al to use the carburizing gas explosion, especially the hydrogen, with combustive which edge Be the air, in A rotary drill seed-planting drill movement between has torus cut out in rotation in A hollow torus, including/understanding: Several engines with the same axis off the engine, has hollow torus, has cut out torus having has punt-hub, guns (2), for each one off them, has feeding system off the engines including/understanding off the bulbs fixed one has carriage, mirrors one has black cylinder which edge turn At the number off revolutions off the driving device, rolls which apart from the triangular mirrors gold parallel board, prevents the fine reflection off the and parallel luminous rays resulting from bulbs fixed one the carriage towards electric photo concealments ordering electromagnetic switches gold induction coils; the device is made off several engines in series which are synchronous one the axis off the engines, the device having moreover segments (8) and (9) off admission and explosion; the segments off admission and closed explosion are worked off very compared to the hollow tori where circulate the unspecified tori cut out according to the resistance off materials; discs (6) and (7) curry the segments which are free in the throats off the quoted discs; the device where faculty to couple the engines one the same axis, Al the desired power, the driving brake by reversing the rotation off nap tori, and the thermal balances off thesis elements is ensured by plurality off the guns; the device moreover including/understanding has system off cooling off the rotary drill seed-planting drill engines, the device is **characterized in that** the segments (8) and (9) off admission and explosion are SODAS to the torus cut out one the level off its punt hub and Al nonthe friction off the tori cut out with the hollow tori.

2. Device according to claim 1) **characterized in that** Dimension off the tori is unspecified goal Al the closed existence off the segments worked off very compared to the hollow tori worked closely; the segments moreover are welded onto the punt-hubs off the tori cut out by to to their ends, except for the micron, and free in the throats off the discs, the to lath edge admitted has variance off diameter with the diameter off the hollow tori; only the segments Al the sealing after gas shock one the discs off explosion with gas joined.

3. Device according to claim 1) **characterized in that** Guns off the same engine off the series thermal are At least two for balances.

4. Device according to claim 1) **characterized in that**, summon tori are reversed and deprived off boxing boxing ring seals to oppose has driving brake to the engines off propulsion which are then without combustion, and this, without shock pàar the fact that the discs cuts has variance off diameter with the hollow tori.

5. Device according to claims' 1) and 4) where the device Includes/understands year accelerator pedal, **characterized in that** the accelerator pedal operates the exchanges the admissions off off the fuels between the tori off propulsion and the tori brakes.

6. Device according to claim 1) **characterized in that** cooling off the toric engines off revolution included/understood has propeller (81) in its careenage (89) causing has draft enough compressed and cooled by the cooling agent (84) in conduits (82) off symmetrical compared to the general axis the engine; the conduits are provided with openings (88) Al the injection off cold air in the hollow tori by the openings (80), by presses, and aspiration due to the movement off the cut out tori.

## Patentansprüche

1. Vorrichtung, die erlaubt, die Gasexplosion zu benutzen, die besonders der Wasserstoff mit einem entzündenden verbrennt, das die Luft sein kann in einer Rotationsbewegung zwischen einem Torus, der in Umdrehung in einem hohlen Torus zerschnitten wurde, die umfaßt:
Mehrere Motoren mit der gleichen Achse des Motors, einem hohlen Torus ein zerschnittener Torus, der ein Tablett-Nabe hat, der Kanonen (2) für jedes von ihnen ein System des Motorenantriebs, der auf einem Wagen festgelegte Glühbirnen umfaßt, Spiegel auf einem schwarzen Zylinder, die mit der Dreh- der Motorvorrichtung drehen können, Zylinderzahl, die außer den dreieckigen Spiegeln oder an parallelen Bord die überlegung der Ziel und parallelen leuchtenden Strahlen, die aus festgelegten Glühbirnen stammen über den Wagen in Richtung elektrischer Photozellen verhindert, die elektromagnetische Schalter oder Induktionsspulen bestellen; die Vorrichtung wird aus mehreren Motoren in Serie gebildet, die auf der Achse der Motoren, der Vorrichtung synchron sind, die außerdem Segmente (8) haben, und (9) von Zulassung und von Explosion; die Zulassungs- und Explosionssegmente werden ganz nahe hinsichtlich der hohlen Tori gearbeitet, wo die nach dem Widerstand der Materialien zerschnittenen verkehren irgendwelche Tori; Platten (6), und (7), tragen die Segmente, die in den Kehlen der erwähnten Platten frei sind; die Vorrichtung, wo die Fähigkeit, die Motoren auf der gleichen Achse zusammenzufügen die gewünschte Kraft, die Motorbremse erlaubt, indem sie die Umdrehung einiger Tori und das thermische Gleichgewicht dieser Elemente umdreht durch Mehrheit der Kanonen gewährleistet; die Vorrichtung außerdem, die ein System des Abkühlens der Umlaufmotoren umfaßt, wird die Vorrichtung charakterisiert, was die Segmente (8), und (9), von Zulassung und von Explosion SODAS am Torus sind, der zerschnitten bei seinem Nabentablett, und die nicht Reibung der Tori erlauben, die mit den hohlen Tori zerschnitten wurden.

2. charakterisierte Vorrichtung nach Forderung 1) was Dimension der Tori ist irgendein, aber erlaubt die Existenz der Segmente, die ganz nahe hinsichtlich der näher gearbeiteten hohlen Tori gearbeitet wurden; die Segmente werden außerdem auf den Tablett-Naben der Tori geschweißt, die durch ihre Enden am Mikron nahe und frei in den Kehlen der Platten zerschnitten wurden, diese Letzten können Durchmesservariance mit dem Durchmesser der hohlen Tori annehmen; einzig erlauben die Segmente die Abdichtung nach gashaltigem Schock auf den Explosionsplatten mit gashaltigen Fugen.

3. charakterisierte Vorrichtung nach Forderung 1) was Kanonen ein und desselben Motors der Serie sind wenigstens an der Zahl von zwei für das thermische Gleichgewicht.

4. charakterisierte Vorrichtung nach Forderung 1) was, einige Tori werden umgedreht und ohne Abdichtungssegmente, um eine Motorbremse den Antriebsmotoren entgegenzusetzen, die dann ohne Verbrennung und dies ohne Schock sind pàar die Tatsache, daß die Platten Durchmesservariance mit den hohlen Tori haben.

5. Vorrichtung nach Forderung 1) und 4) wo die Vorrichtung Erfaßt ein Gaspedal charakterisiert, was das Gaspedal durchführt die änderung der Zulassungen der Treibstoffe zwischen den Antriebstori und den Bremstori.

6. charakterisierte Vorrichtung nach Forderung 1) was Abkühlen der wulstförmigen Revolutionsmotoren umfaßt einen Propeller (81) in seinem Kielholen (89), das einen Luftzug verursacht, der genug komprimiert, und der durch das Kühlmittel (84) in symmetrischen Leitungen (82) hinsichtlich der allgemeinen Achse des Motors abgekühlt wurde; die Leitungen werden mit Mündungen (88) ausgestattet, die die Injektion kalter Luft in den hohlen Tori durch die öffnungen (80) erlauben, durch Druck und durch Aspiration, die auf die Bewegung der zerschnittenen Tori zurückzuführen ist.
